Europäisches Patentamt

European Patent Office

Office européen des brevets

(19)

(11) Veröffentlichungsnummer: **0 309 601 B1**

(12) **EUROPÄISCHE PATENTSCHRIFT**

(45) Veröffentlichungstag der Patentschrift: **03.04.91**

(51) Int. Cl.5: **B29C 51/16**

(21) Anmeldenummer: **87114252.7**

(22) Anmeldetag: **30.09.87**

(54) Verfahren und Vorrichtung zum Herstellen kaschierter Formteile.

(43) Veröffentlichungstag der Anmeldung:
**05.04.89 Patentblatt 89/14**

(45) Bekanntmachung des Hinweises auf die
Patenterteilung:
**03.04.91 Patentblatt 91/14**

(84) Benannte Vertragsstaaten:
**AT BE CH DE ES FR GB IT LI NL SE**

(56) Entgegenhaltungen:
EP-A- 0 118 796
EP-A- 0 145 832
DE-A- 3 033 166
DE-A- 3 109 338
DE-A- 3 128 977

(73) Patentinhaber: **Casimir Kast GmbH & Co. KG
Obertsroterstrasse 2
W-7562 Gernsbach(DE)**

(72) Erfinder: **Oppermann, Rüdiger
E-Holtzmann-Strasse 164
W-7566 Weisenbach(DE)**
Erfinder: **Roth, Adalbert
Kirchstrasse 44
W-7564 Forbach(DE)**

(74) Vertreter: **Dr.-Ing. Hans Lichti Dipl.-Ing. Heiner
Lichti Dipl.-Phys. Dr. Jost Lempert
Postfach 41 07 60 Durlacher Strasse 31
W-7500 Karlsruhe 41(DE)**

Rank Xerox (UK) Business Services

Beschreibung

Die Erfindung betrifft ein Verfahren zum Herstellen von Formteilen aus porösen Werkstoffen, die zumindest auf einem Teilbereich ihrer Dekorseite mit einer Kunststoff-Folie kaschiert werden und im verbleibenden Bereich ein anderes Dekor aufweisen, indem die Folie durch Erwärmen plastifiziert, anschließend auf die Dekorseite des Formteils aufgebracht, unter Abdichten des über das Formteil überstehenden Folienrandes mittels Unterdruck auf das Formteil aufgeformt und durch einen Haftvermittler befestigt wird. Ferner ist die Erfindung auf eine Vorrichtung zur Durchführung des Verfahrens gerichtet.

Kaschierte Formteile des vorgenannten Aufbaus werden vor allem in der KFZ-Industrie für Innenverkleidungen, Ablagen etc. in mannigfaltiger Formgebung und Oberflächengestaltung eingesetzt. Für diese Formteile werden aus Kostengründen preisgünstige Werkstoffe, wie Faserwerkstoffe unterschiedlicher Art und Zusammensetzung, aber auch geschlossenporige verwendet, die vor allem ein geringes Gewicht aufweisen sollen. Soweit es sich um Faserwerkstoffe handelt, werden sie mit Bindemitteln versetzt und in Pressen zu Formteilen umgeformt. Diese Formteile werden anschließend konfektioniert, beispielsweise lackiert, kaschiert und mit technischen oder gestalterischen Teilen aus Metall oder Kunststoff versehen. Gleiches gilt für gespritzte oder gegossene Formteile.

Die Erfindung befaßt sich ausschließlich mit dem Kaschiervorgang. Hierbei werden Kunststoff-Folien verschiedener Struktur und Farbe in der eingangs genannten Weise auf die Dekorseite des Formteils aufkaschiert. Dies geschieht bei einem für die preisgünstige Serienfertigung besonders günstigen Verfahren durch Aufsaugen auf das Formteil mittels Vakuum. Hiermit lassen sich auch tief ausgeformte und mit Hinterschnitten versehene Formteile einwandfrei kaschieren. Nachteilig ist das Verfahren bei geschlossenporigen Werkstoffen, die mehrfach verbohrt werden müssen, um das Vakuum auf die Folie wirken zu lassen. Auch ist das Verfahren nur bei einer vollständigen Kaschierung des gesamten Formteils anwendbar. Es muß nämlich die Folie an allen Rändern des Formteils überstehen, um an dem überstehenden Rand eine ebene Dichtfläche zu erhalten, die das Ansaugen der Folie von der Unterseite des Formteils her gestattet.

Will man das Verbohren des Formteils vermeiden, so muß die Folie vorgeformt werden (DE-A1 31 28 9/7). Nach dem Auflegen der vorgeformten Folie auf das Formteil wird die gesamte Einheit einem Unterdruck ausgesetzt, so daß die Luft zwischen Folie und Formteil abgesaugt wird. Danach soll der Unterdruck nur noch auf der Unterseite des Formteils anstehen, während auf die Oberseite der Folie Atmosphären- oder Überdruck aufgegeben wird, während gleichzeitig eine Erwärmung zur Aktivierung des Haftvermittlers (Klebers) stattfindet. Dieses Verfahren läßt sich nur dann anwenden, wenn das Formteil vollflächig kaschiert wird und im übrigen die Folie die notwendige Formbarkeit und Formstabilität besitzt, um das Vorformen und Transportieren der Folie zu gestatten. Auch läßt sich nicht mit Sicherheit ausschließen, daß zwischen vorgeformter Folie und Formteil Luftblasen eingeschlossen werden.

Soll ein Formteil nur teilweise oder in verschiedenen Bereichen mit unterschiedlichen Folien oder anderen Dekor materialien kaschiert werden, so muß die aufkaschierte Folie nachträglich im Dekortrennbereich auf den gewünschten Umriß zurückgeschnitten werden, so daß erhebliche Abfallverluste entstehen. Ein Teilkaschieren mit vorgegebenen Folienzuschnitten, die kleiner sind als der Formteilumriß, ist hingegen mit dem sogenannten Stempelverfahren möglich, bei dem die Folie mechanisch durch Teilstempel auf das Formteil aufgeformt wird. Dieses Verfahren ist bei stark und tief konturierten Formteilen und bei einer hinterschnittenen Kontur nicht anwendbar und in maschineller Hinsicht aufwendig.

Schließlich ist es bei dem eingangs genannten und den Oberbegriff des Patentanspruchs 1 bildenden Verfahren bekannt (DE-A1 31 09 338) auf das im übrigen luftdurchlässig ausgebildete Formteil eine umrißgleiche Folie mittels Unterdruck aufzukaschieren, die auf ihrer Sichtseite verschiedene Dekors, die durch eine Dekortrennlinie optisch voneinander getrennt sind, aufweist. Vor dem Anlegen des Unterdrucks werden Folie und Formteil, wie beim vorgenannten Verfahren, durch Pressen aufeinander abgedichtet und es wird die Folie entlang der Dekortrennlinie auf dem Formteil durch eine Druckleiste fixiert, um ein Verrutschen oder "Verlaufen" der Dekortrennlinie zu vermeiden. Damit lassen sich aber weder nur Teilbereiche kaschieren, noch das Formteil in verschiedenen Bereichen mit unterschiedlichen Materialien teilkaschieren. Auch sind die hierfür notwendigen Folien aufgrund der zwei verschiedenen Dekors teuer. Zudem ist nur eine in Laufrichtung der Folienbahn geradlinige Trennung der Dekorbereiche möglich. Hierdurch sind die Gestaltungsmöglichkeiten erheblich eingeschränkt und leidet die Flexibilität in der Fertigung.

Der Erfindung liegt die Aufgabe zugrunde, das eingangs genannte Verfahren, bei dem die Folie mittels Unterdruck aufkaschiert wird, dahingehend weiterzuentwickeln, daß ein verlustarmes Teilkaschieren von Formteilen möglich ist.

Diese Aufgabe wird erfindungsgemäß dadurch gelöst, daß ein Folienzuschnitt entsprechend dem zu kaschierenden Teilbereich hergestellt und nach dem Aufbringen auf das Formteil entlang des Dekortrennbereichs der dort vorhandenen Kontur des Formteils folgend gegenüber dessen Oberfläche abgedichtet wird und daß anschließend etwa zeitgleich mit der Einwirkung des Unterdrucks ein Überdruck auf die Dekorseite der Kunststoff-Folie zur Wirkung gebracht wird.

Das erfindungsgemäße Verfahren verwendet für die Kaschierung einen Folienzuschnitt, der mit geringem Übermaß dem zu kaschierenden Teilbereich des Formteils entspricht. Hierdurch wird zunächst, ähnlich wie beim Stempelkaschieren, eine erhebliche Materialersparnis gegenüber der Vollkaschierung erzielt. Ferner lassen sich die Zuschnitte materialsparend von der Rolle ausstanzen. Auch können in den Dekorbereichen beliebig unterschiedliche Werkstoffe bzw. außerhalb des folienkaschierten Bereichs auch andere Beschichtungsverfahren einsetzen.

Die Verwendung nur eines Folienzuschnittes bei Formteilen aus porösen Werkstoffen würde beim Aufkaschieren mittels Vakuum dazu führen, daß außerhalb des Dekortrennbereichs Seitenluft zwishen Folie und Formteil und durch das Formteil gesaugt werden kann, wodurch sich unterhalb der Folie ein nur unzureichendes Vakuum bildet. Dem wird erfindungemäß dadurch abgeholfen, daß der Folienzuschnitt gegenüber dem Formteil entlang des Dekortrennbereichs der Folie und der dort vorhandenen Kontur des Formteils folgend abgedichtet wird. Es wird also die Folie entlang der Zuschnittkante dichtend angedrückt. Der etwa zeitgleich mit dem Unterdruck auf die freie Oberfläche des Folienzuschnittes wirkende Überdruck sorgt für ein einwandfreies Aufformen der Folie auf das Formteil, auch dann, wenn das Formteil tiefe und enge Konturen oder Hinterschnitte aufweist.

Praktische Versuche mit dem erfindungsgemäßen Verfahren haben gezeigt, daß auf diese Weise eine einwandfreie Teilkaschierung von Formteilen aus porösen Werkstoffen auf rein pneumatischen Weg möglich ist. Dabei können herkömmliche Haftvermittler auf dem Folienzuschnitt und/oder dem Formteil verwendet werden.

In bevorzugter Ausführung des erfindungsgemäßen Verfahrens ist vorgesehen, daß etwa zeitgleich mit dem auf den Folienzuschnitt wirkenden Überdruck und dem auf die Unterseite des Formteils wirkenden Unterdruck auf die das andere Dekor aufweisende Seite des Formteils außerhalb des Überdruckbereichs Unterdruck aufgebracht wird. Damit ist sichergestellt, daß keine Fehlluft über den außerhalb des Dekortrennbereichs liegenden Bereich des porösen Formteils unter die Folie gesaugt wird.

Der Überdruck oberhalb des Folienzuschnittes ist vorzugsweise einstellbar, um ihn an die vom Formteil und von der Folie her gegebenen Bedingungen anpassen zu können.

In weiterer Ausführung des erfindungsgemäßen Verfahrens ist, wie an sich bekannt, vorgesehen, daß zwischen dem Rand des Formteils und dem überstehenden Rand der Kunststoff-Folie an dieser eine Materialzugabe vorgesehen wird und der Unterdruck und der Überdruck im Bereich des Formteilrandes derart zur Wirkung gebracht werden, daß die Folie um den Formteilrand herumgeformt wird.

Mit der kombinierten Anwendung von Unterdruck auf der Unterseite der Folie und einen gegebenenfalls hohen Überdruck auf deren Dekorseite ist es bei entsprechender Materialzugabe im Bereich des überstehenden Folienrandes möglich, diese Materialzugabe um die Formteilkante herumzuziehen und dabei zumindest die Stirnkante des Formteils abzudecken, gegebenenfalls auch die Folie noch ein kurzes Stück auf der Rückseite des Formteils herumzuziehen. Es entsteht ein auch im Randbereich sauber kaschiertes Formteil.

Zur Durchführung des Verfahrens geht die Erfindung von einer bekannten Vorrichtung (DE-OS 31 09 338) aus, die aus einer Heizstation zum Aufwärmen und Plastifizieren der Folie, einer Kaschierstation mit einer das Formteil aufnehmenden, an Unterdruck angeschlossenen Stützform und einer über dieser angeordneten Druckglocke, die beide außerhalb der Formkontur liegende Dichtflächen aufweisen, wobei die Stützform mit ihrer Dichtfläche unter dichtem Einklemmen des überstehenden Folienrandes gegen die Druckglocke verfahrbar ist, und aus einer die Folie an der Heizstation aufnehmenden und zur Kaschierstation transportierenden Übergabeeinrichtung besteht.

Gegenüber diesem Stand der Technik zeichnet sich die erfindungsgemäße Vorrichtung dadurch aus, daß die Druckglocke und die Stützform in dem Dekortrennbereich des Formteils dessen Kontur folgende Dichtflächen aufweisen, und daß die Druckglocke im Raum hinter der Kunststoff-Folie an einstellbaren Überdruck anschließbar ist.

Die Funktionsweise der erfindungsgemäßen Vorrichtung ist folgende: Es wird zunächst in ansonsten herkömmlicher Weise aus der Folienbahn ein Zuschnitt hergestellt, dessen Umriß dem zu kaschierenden Teilbereich des Formteils mit einer entsprechenden Materialzugabe entlang des Formteilrandes folgt. Dieser Folienzuschnitt wird an der Heizstation aufgewärmt und plastifiziert, so daß die Folie verformbar wird. Anschließend wird die Folie von einer Übergabeeinrichtung, die beispielsweise mittels Saugern, mechanischen Greifern oder dgl. ausgerüstet ist, aufgenommen und über die Stützform und das darauf liegende Formteil in die Kaschierstation transportiert. Dort wird der Folienzuschnitt auf das Formteil abgesenkt, so daß die Folie entlang eines Teils der Formteilränder übersteht und entlang des Dekortrennbereichs auf dem Formteil aufliegt. Anschließend wird die Druckglocke abgesenkt, so daß ihre Dichtflächen und die Dichtflächen an der Stützform unter Einklemmen der Folie und des Formteils den zu kaschierenden Teilbereich des Formteils abdichten. Anschließend wird an die Stützform Unterdruck angelegt und die Druckglocke mit Druckluft beaufschlagt und unter Wirkung dieser Druckdifferenz die Folie auf das Formteil aufgeformt. Dadurch, daß die Dichtflächen an der Druckglocke und der Stützform entlang des Dekortrennbereichs der Kontur des Formteils folgen, ist auch dort ein dichter Abschluß und ein einwandfreies Aufformen der Folie gewährleistet. Durch die Einstellbarkeit des Überdrucks ist es möglich, den auf die Folie wirkenden Druck bzw. die wirksam werdende Druckdifferenz an die jeweiligen Gegebenheiten des Formteils und/oder der Kaschierfolie anzupassen. Nach einer kurzen Einwirkungszeit, in der der Haftvermittler seine Wirkung entfaltet, können die Übergabeeinrichtung und die Druckglocke wieder hochfahren und kann anschließend das Formteil von der Stützform abgenommen werden.

Gemäß einer bevorzugten Ausführungsform der Erfindung, die insbesondere bei zusätzlicher Anwendung von Unterdruck an der Stützform eingesetzt wird, weist die Druckglocke zwei Kammern auf, deren Trennwand entlang des Dekortrennbereichs verläuft und von denen die dem Folienzuschnitt zugeordnete Kammer an den Überdruck angeschlossen ist, während die andere Kammer an Überdruck anschließbar ist.

Es ist bereits eingangs angedeutet worden, daß bei einer Teilkaschierung von porösen oder perforierten Formteilen mittels Unterdruck über den außerhalb des Dekortrennbereichs liegenden Abschnitt des Formteils Luft in den Vakuumraum eindringt. Dies wird durch die vorgenannte Ausführungsform vermieden, indem sowohl an der Unterseite des Formteils, als auch an der Oberseite außerhalb des Folienzuschnittes für den zu kaschierenden Teilbereich ein Unterdruck ansteht, während auf der Dekorseite des Folienzuschnittes Überdruck herrscht. Es kann also nicht zu Luftleckage durch das Formteil hindurchkommen. Dadurch ist das Aufkaschieren des Folienzuschnittes in optimaler Weise möglich.

In weiterer zweckmäßiger Ausgestaltung sind in der Überdruckkammer der Druckglocke Wärmestrahler eingebaut, um die Folie nach Aufnahme an der Heizstation oder aber nur während des Kaschiervorgangs auf Temperatur zu halten.

In weiterhin vorteilhafter Ausführung wird die Überdruck-Kammer der Druckglocke nach Abschluß des Kaschiervorgangs mittels Druckluft gespült. Das Spülen erfolgt bei noch aufsitzender Druckglocke. Dadurch wird der Abkühlvorgang innerhalb des Überdruckraums und somit auch der aufkaschierten Folie beschleunigt.

Die Abdichtung entlang des Dekortrennbereichs kann in einer zweckmäßigen Ausführungsform dadurch geschehen, daß die Druckglocke als Dichtfläche eine den Zuschnitt der Kunststoff-Folie folgende Dichtleiste und die Stützform eine die Dichtfläche bildende elastische Dichtschnur aufweist.

Um die Folie auch um den Rand des Formteils herumzuformen ist bei dem eingangs genannten Verfahren bekannt, die Stützform entlang des Randes ihrer Formkontur zu hinterschneiden, so daß der Rand des Formteils freiliegt. Durch Saugkanäle, die an dem Hinterschnitt ausmünden, kann die Folie um die Formteilkante herumgezogen werden. Diese Möglichkeit läßt sich bei der erfindungsgemäßen Vorrichtung noch dadurch optimieren, daß die Stützform zwischen dem Hinterschnitt am Rand der Formkontur und der Dichtfläche für den überstehenden Folienrand eine rinnenförmige Vertiefung aufweist. Aufgrund des auf die Dekorseite der Folie wirkenden Überdrucks kann die Folie relativ großflächig in den Hinterschnitt und die anschließende Vertiefung hineingedrückt werden, wobei die Folie durch entsprechende Höhe des Überdrucks gegebenenfalls zusätzlich gedehnt wird. Hiermit ist eine einwandfreie Abdeckung auch des Formteilrandes mit der Folie zu erreichen.

Eine bevorzugte Ausführungsform der Erfindung zeichnet sich weiterhin dadurch aus, daß an der Heizstation eine Aufnahme für den Folienzuschnitt vorgesehen ist, deren Oberfläche zumindest in Teilbereichen eine etwa dem Formteil entsprechende Kontur aufweist. Dabei ist die Aufnahme mit Vorteil temperierbar.

Der auf die Aufnahme an der Heizstation aufgelegte Folienzuschnitt kann durch Wärmestrahlung von oben und Kontaktwärme von unten schnell auf gewünschte Temperatur gebracht werden. Dabei paßt sich der lose aufgelegte Folienzuschnitt bereits weitestgehend der Konturierung der Oberfläche an der Aufnahme an, wird also in gewissem Maß vorgeformt. Wird nun diese plastifizierte Folie von der Übergabeeinrichtung mit der Druckglocke übernommen, so kann sie beispielsweise bei Anschluß der Druckglocke an Unterdruck in dem vorgeformten Zustand an die Kaschierstation übergeben und dort auf die Stützform abgelegt werden.

Auch die Aufnahme an der Heizstation ist zweckmäßigerweise mit Kanälen versehen, die zum Halten oder Abheben des Folienzuschnittes an Über- oder Unterdruck anschließbar sind. Dabei kann mittels Unterdruck gegebenenfalls das Vorformen der Folie unterstützt werden.

Die Übergabeeinrichtung kann, wie an sich bekannt, einen Rahmen mit Haltegliedern, z. B. mechanischen Greifern, Saugnäpfen oder dgl., für den Folienzuschnitt aufweisen. Dieser Rahmen mit den Haltegliedern umgibt die Druckglocke und ist erfindungsgemäß gegenüber der Druckglocke bzw. ihrer Dichtfläche höhenverstellbar. Aufgrund dieser Höhenverstellbarkeit kann der über die Druckglocke hinausstehende Folienrand beispielsweise während der Übergabe über die Dichtfläche nach oben angehoben werden, so daß - gegebenenfalls unter Einwirkung des Unterdrucks innerhalb der Druckglocke an der Heizstation bereits an die Dichtfläche der Druckglocke angedrückt wird und für eine gewisse Abdichtung sorgt.

Nachstehend ist die Erfindung anhand von in der Zeichnung gezeigten Ausführungsbeispielen beschrieben. In der Zeichnung zeigen:

Figur 1    eine schematische Ansicht auf ein Formteil mit Teilkaschierung in Form einer PKW-Türverkleidung;

Figur 2    einen Schnitt II-II gemäß Figur 1;

Figur 3    eine schemtaische Ansicht einer Vorrichtung zum Teilkaschieren von Formteilen;

Figur 4    einen Schnitt IV-IV gemäß Figur 3;

Figur 5    eine vergrößerte Teilansicht von oben an der Kaschierstation im Bereich V des Formteils gemäß Figur 4;

Figur 6    einen Schnitt VI-VI gemäß Figur 5;

Figur 7    einen Schnitt VII-VII gemäß Figur 5;

Figur 8    einen den Figuren 6 und 7 ähnlicher Schnitt entlang der Schnittlinie VIII-VIII gemäß Figur 1.

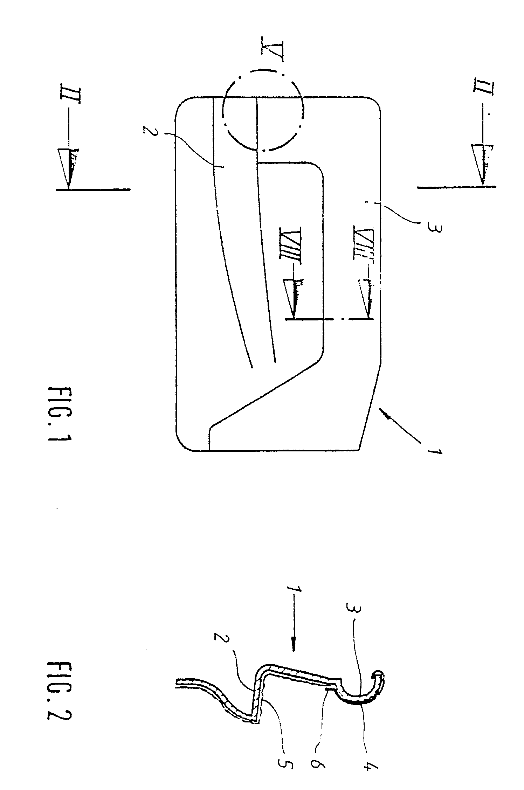

Das in den Figuren 1 und 2 dargestellte Formteil 1 weist einen im wesentlichen rechteckigen Umriß auf und ist beispielsweise aus einem Zellfaserverbund durch formgebendes Verpressen hergestellt. Das Formteil 1 ist beim gezeigten Ausführungsbeispiel als PKW-Türverkleidung ausgebildet und weist in seinem mittleren Bereich eine ausgeformte oder eingeformte Mulde 2 als Armauflage auf. Oberhalb dieser Armauflage ist das Formteil mit einer Brüstungskontur 3 versehen, die an den kurzen Seiten des Formteils ansetzend im Bereich der Armauflage 2 nach oben gezogen ist. In diesem Brüstungsbereich ist das Formteil 1 mit einer Kunststoff-Folie 4 (Figur 2) bestimmter Farbe, Struktur etc. kaschiert, während der übrige Bereich beispielsweise mit einem Textilbelag 5 oder dgl.versehen ist. Der zwischen der Kunststoff-Folie 4 und dem Textilbelag vorhandene Dekortrennbereich 6 kann durch ein aufgelegtes anderes Material, durch Zierstreifen oder andere differierende Struktur abgegrenzt sein.

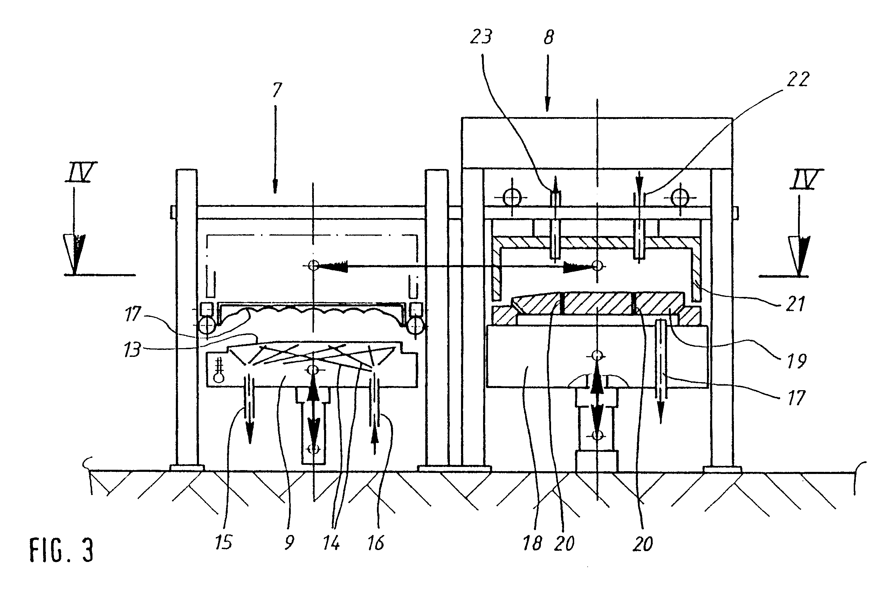

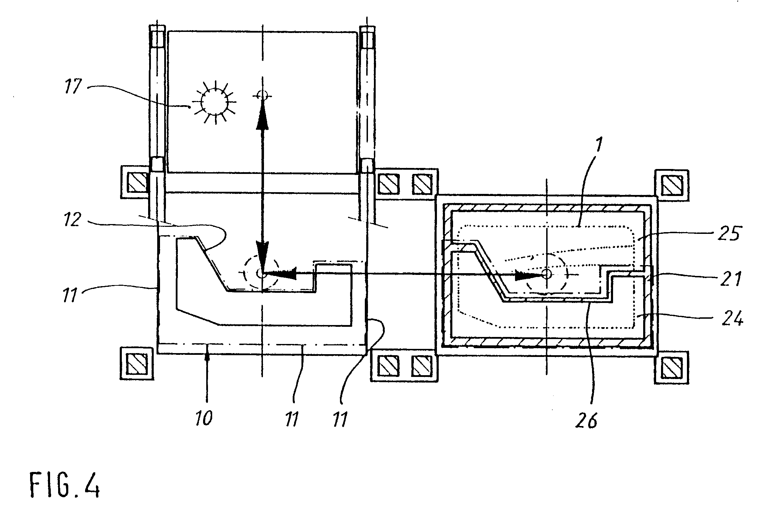

In den Figuren 3 und 4 ist die zur Herstellung der Teilkaschierung gemäß Figur 1 und 2 dienende Vorrichtung gezeigt. Sie besteht im wesentlichen aus einer Heizstation 7 und einer Kaschierstation 8, die nebeneinander angeordnet sind. An der Heizstation 7 befindet sich eine Aufnahme 9, die ähnlich einem Hubtisch heb- und senkbar ist. Die Aufnahme 9 weist in der Draufsicht einen Umriß auf, der etwa dem zum Kaschieren des Brüstungsbereichs gemäß Figur 1 und 2 notwendigen Folienzuschnitt entspricht. Dieser Folienzuschnitt 10 ist in Figur 4 mit strichpunktierten Linien angedeutet. Er weist im wesentlichen drei geradlinige Ränder 11 auf, die gegenüber dem tatsächlichen Materialverbrauch für den Brüstungsbereich einen Überstand bilden. Der vierte Rand 12 des Folienzuschnittes folgt etwa der durch den Dekortrennbereich 6 (Figur 2) vorgegebenen Linie.

Beim gezeigten Ausführungsbeispiel weist die Aufnahme 9 eine konturierte Oberfläche 13 auf, die zumindest in Teilbereichen der Kontur des Brüstungsbereichs 3 des Formteils 1 folgt, und zwar insbesondere in den stark konturierten Bereichen. Ferner ist die Aufnahme 9 mit Kanälen 14 versehen, die über Anschlüsse 15, 16 an Unterdruck und/oder Überdruck anschließbar sind, um den Folienzuschnitt auf der Oberfläche 13 der Aufnahme zu halten oder von ihr abzuheben.

Die Heizstation wird durch ein oder mehrere Wärmestrahler 17 vervollständigt, die auf einer Führung sitzen und aus einer Position oberhalb der Aufnahme 9 in eine dahinterliegende Position verfahrbar sind (Figur 4), um den Raum oberhalb der Aufnahme 9 freizugeben.

Die neben der Heizstation 7 angeordnete Kaschierstation 8 weist einen Hubtisch 18 auf, auf dem eine Stützform 19 lösbar befestigt ist. Beim wiedergegebenen Ausführungsbeispiel ist auch die Stützform 19 mit Kanälen versehen, die über eine Leitung 20 an Unterdruck anschließbar sind. Die Stützform 19 weist einen Umriß und eine Oberflächenkontur entsprechend dem Formteil 1 auf, so daß das Formteil auf die Stützform satt aufgelegt werden kann.

Zwischen der Heizstation 7 und der Kaschierstation 8 ist eine Übergabeeinrichtung verfahrbar, von der in den Figuren 3 und 4 nur ein Teil erkennbar ist, nämlich die Druckglocke 21, die an der Kaschierstation über eine Leitung 22 an Druckluft und über eine Leitung 23 an Unterdruck anschließbar ist, wobei der Unterdruck-Anschluß lediglich zum Aufnehmen der Folie an der Heizstation dient, während der Druckluftanschluß 22 für das Kaschieren selbst vorgesehen ist. Gegebenenfalls können auch beide Anschlüsse oder aber ein weiterer Anschluß zum Spülen der Druckglocke 21 dienen.

Bei dem Ausführungsbeispiel gemäß Figur 3 ff. weist die Druckglocke 21 zwei Kammern 24 und 25 auf (Figur 4), von denen die Kammer 24 den Druckluftanschluß 22 aufweist, während die Kammer 25 mit einem nichtgezeigten Unterdruckanschluß versehen ist. Die Trennwand 26 zwischen den beiden Kammern 24, 25 folgt etwa dem Dekortrennbereich 6 gemäß Figur 2 bzw. der Zuschnittkante 12 des Folienzuschnittes gemäß Figur 4.

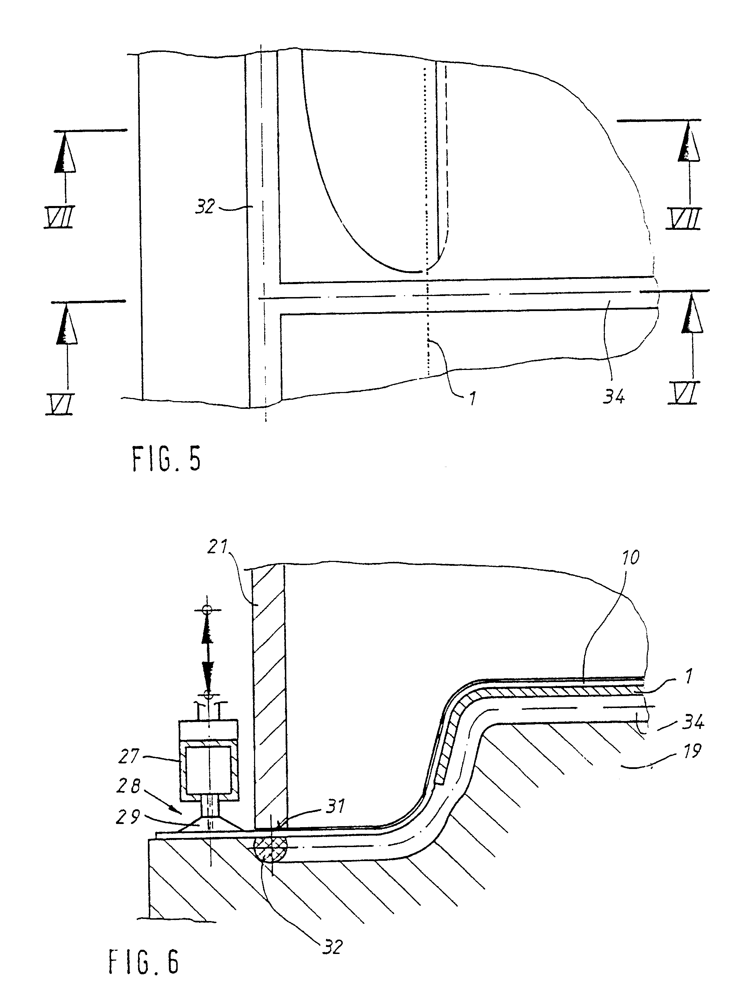

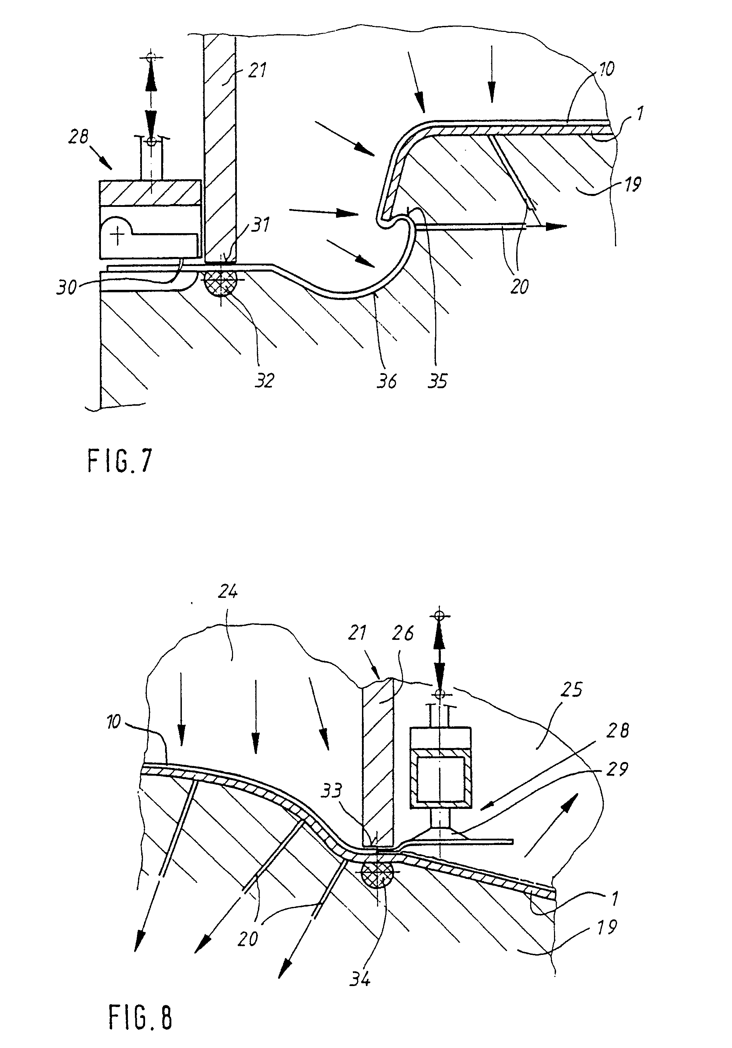

Wie aus den Figuren 6 bis 8 ersichtlich, ist die Druckglocke 21 von einem Rahmen 27 umgeben, der, wie mit den Richtungspfeilen angedeutet, gegenüber der Druckglocke 21 heb- und senkbar ist. Der Rahmen 27 weist mehrere Greifelemente 28 auf,die beispielsweise als Saugnäpfe 29 (Figur 6 und 8) oder als schwenkbar gelagerte Haken 30 ausgebildet sind und den Folienzuschnitt 10 an seinem den Brüstungsbereich 3 des Formteils 1 überragenden Überstand an der Heizstation 7 ergreifen. Der Rahmen 27 mit den Haltegliedern 28 ist zusammen mit der Druckglocke 21 Teil der Übergabeeinrichtung für den Transport des Folienzuschnittes 10 von der Heizstation 7 zur Kaschierstation.

Sofern, wie in bevorzugter Ausführung vorgesehen, die Druckglocke 21 zwei Kammern 24, 25 aufweist, folgt der Rahmen 27 nur den äußeren geradlinigen Rändern 11 des Folienzuschnittes 10 (Figur 4), während druckseitig der Trennwand 26 die Greiforgane 28 innerhalb des Druckraums 25 (Figur 8) einzeln oder an einer gemeinsamen Tragleiste angeordnet sind.

Die Druckglocke 21 weist an ihren unteren Stirnflächen Dichtflächen 31 auf. Ebenso ist die Stützform 19 an der den Stirnkanten 31 gegenüberliegenden Seite mit einer Dichtfläche, z. B. in Form einer Dichtschnur 32 versehen. Diese ist in die Stützform 19 mit definiertem Überstand eingelegt. Die Dichtflächen 31 und 32 klemmen den Folienzuschnitt 10 entlang seiner geradlinigen Ränder 11 dichtend zwischen sich ein. Darüber hinaus weist die Druckglocke 21 an der unteren Stirnkante der Trennwand 26 (Figur 8) eine Dichtfläche 33 in Form einer Dichtleiste auf, die der Kontur des Formteils im Dekortrennbereich 6 folgt. Ebenso weist die Stützform 19 der Trennwand 26 gegenüberliegend eine mit definiertem Überstand eingelegte Dichtschnur 34 auf, die wiederum der Kontur des Formteils im Dekortrennbereich 5 folgt.

Mit Hilfe der Dichtflächen 31, 32 und 33, 34 läßt sich die auf die Stützform 19 aufgelegte Folien dichtend einklemmen, so daß der Brüstungsbereich 3 des Formteils 1 gegenüber der Umgebung wirksam abgedichtet ist. In diesem Bereich ist die Stützform 19 mit den Saugkanälen 20 ausgestattet, über die Vakuum auf die Unterseite des Folienzuschnittes 10 zur Wirkung gebracht werden kann. Zugleich wird über die Druckglocke 21 bzw. die Überdruck-Kammer 24 derselben Überdruck auf die Dekorseite des Folienzuschnittes 10 aufgegeben, so daß sich der aus der Heizstation plastifiziert an die Stützform 19 abgegebene Folienzuschnitt auf die Kontur des Brüstungsbereichs 3 des Formteils aufgeformt wird.

Im Bereich einer oder mehrerer Randkanten des Formteils 1 ist die Stützform 19 mit einem Hinterschnitt 35 versehen, wie dies Figur 7 zeigt. An den Hinterschnitt schließt sich ferner eine vertiefte Rinne 36 an, so daß bei Einwirkung des Unterdrucks auf die Unterseite der Folie und des Überdrucks auf die Dekorseite der Überstand des Folienzuschnittes über den Formteilrand in diese Kontur hineingeformt wird und den Rand des Formteils 1 sauber abschließt.

Innerhalb der Druckglocke 21 bzw. der Überdruck-Kammer 24 derselben können gegebenenfalls Wärmestrahler eingebaut sein, um den Folienzuschnitt während der Übergabe, gegebenenfalls auch noch während des Aufformens auf Temperatur zu halten. Sie kann ferner beim Aufnehmen des Folienzuschnittes an der Heizstation 7 an Vakuum angeschlossen sein, um die plastifizierte und vorgeformte Folie an die unteren Stirnkanten 31 und 33 heranzuziehen. Dieser Vorgang kann noch dadurch unterstützt werden, daß der Rahmen 27 mit den Haltegliedern 28 gegenüber den Stirnkanten 31, 33 der Druckglocke 21 anhebbar ist, so daß der Folienzuschnitt in einem nach oben gewölbten Zustand mittels der Übergabeeinrichtung in die Kaschierstation 8 transportiert und dort durch Hochfahren des Hubtischs 18 einwandfrei auf die Stützform übergeben werden kann.

## Ansprüche

1. Verfahren zum Herstellen von Formteilen (1) aus porösen Werkstoffen, die zumindest auf einem Teilbereich (3) ihrer Dekorseite mit einer Kunststoff-Folie (4) kaschiert werden und im verbleibenden Bereich (2) ein anderes Dekor (5) aufweisen, indem die Folie durch Erwärmen plastifiziert, anschließend auf die Dekorseite des Formteils aufgebracht, unter Abdichten des über das Formteil überstehenden Folienrandes mittels Unterdruck auf das Formteil aufgeformt und durch einen Haftvermittler befestigt wird, dadurch gekennzeichnet, daß ein Folienzuschnitt (10) entsprechend dem zu kaschierenden Teilbereich (3) hergestellt und nach dem Aufbringen auf das Formteil (1) entlang des Dekortrennbereichs (6) der dort vorhandenen Kontur des Formteils folgend gegenüber dessen Oberfläche abgedichtet wird, und daß anschließend etwa zeitgleich mit der Einwirkung des Unterdrucks ein Überdruck auf die Dekorseite der Kunststoff-Folie zur Wirkung gebracht wird.

2. Verfahren nach Anspruch 1, dadurch gekennzeichnet, daß etwa zeitgleich mit dem auf den Folienzuschnitt (16) wirkenden Überdruck und dem auf die Unterseite des Formteils (1) wirkenden Unterdruck auf die das andere Dekor (5) aufweisende Seite des Formteils außerhalb des Überdruckbereichs Unterdruck aufgebracht wird.

3. Verfahren nach Anspruch 1 oder 2, dadurch gekennzeichnet, daß der auf die Dekorseite der Kunststoff-Folie (4) wirkende Überdruck einstellbar ist.

4. Verfahren nach einem der Anprüche 1 bis 3, dadurch gekennzeichnet, daß zwischen dem Rand des Formteils (1) und dem überstehenden Rand der Kunststoff-Folie (4) an dieser eine Materialzugabe vorgesehen wird und der Unterdruck und der Überdruck im Bereich des Formteilrandes derart zur Wirkung gebracht werden, daß die Folie um den Formteilrand herumgeformt wird.

5. Vorrichtung zur Durchführung des Verfahrens nach Anspruch 1, bestehend aus einer Heizstation (7) zum Aufwärmen und Plastifizieren der Kunststoff-Folie (10), einer Kaschierstation (8) mit einer das Formteil (1) aufnehmenden an Unterdruck angeschlossenen Stützform (19) und einer über dieser angeordneten Druckglokke (21), die beide außerhalb der Formkontur liegende Dichtflächen (31,32) aufweisen, wobei die Stützform mit ihrer Dichtfläche unter dichtem Einklemmen des überstehenden Folienrandes gegen die Druckglocke verfahrbar ist, und mit einer die Kunststoff-Folie an der Heizstation aufnehmenden und zur Kaschierstation transportierenden Übergabeeinrichtung (21), dadurch gekennzeichnet, daß die Druckglocke (21) und die Stützform (19) in dem Dekortrennbereich (6) des Formteils (1) dessen Kontur folgende Dichtflächen (33) bzw. (34) aufweisen, und daß die Druckglocke (21) im Raum hinter dem Folienzuschnitt (10) an einstellbaren Überdruck anschließbar ist.

6. Vorrichtung nach Anspruch 5, zur Durchführung des Verfahrens nach Anspruch 2, dadurch gekennzeichnet, daß die Druckglocke (21) zwei Kammern (24, 25) aufweist, deren Trennwand (26) entlang des Dekortrennbereichs (6) verläuft und von denen die dem Folienzuschnitt (10) zugeordnete Kammer (24) an den Überdruck angeschlossen ist, während die andere Kammer (25) an Unterdruck anschließbar ist.

7. Vorrichtung nach einem der Ansprüche 5 oder 6, dadurch gekennzeichnet, daß in der Überdruck-Kammer (24) der Druckglocke (21) Wärmestrahler eingebaut sind.

8. Vorrichtung nach einem der Ansprüche 5 bis 7, dadurch gekennzeichnet, daß die Überdruck-Kammer (24) der Druckglocke (21) nach Abschluß des Kaschiervorgangs mittels Druckluft gespült wird.

9. Vorrichtung nach einem der Ansprüche 5 bis 8, dadurch gekennzeichnet, daß die Druckglokke (21) als Dichtfläche eine dem Zuschnitt (10) der Kunststoff-Folie folgende Dichtleise (31, 33) und die Stützform (19) eine die Dichtfläche bildende elastische Dichtschnur (32, 34) aufweist.

10. Vorrichtung nach einem der Ansprüche 5 bis 9, insbesondere zur Durchführung des Verfahrens nach Anspruch 4, wobei die Stützform (19) entlang des Randes ihrer Formkontur hinterschnitten ist derart, daß der Rand des Formteils (1) freiliegt und an dem Hinterschnitt Saugkanäle (20) ausmünden, dadurch gekennzeichnet, daß die Stützform (19) zwischen dem Hinterschnitt (35) am Rand der Formkontur und der Dichtfläche für den überstehenden Folienrand eine rinnenförmige Vertiefung (36) aufweist.

11. Vorrichtung nach einem der Ansprüche 5 bis 10, dadurch gekennzeichnet, daß an der Heizstation eine Aufnahme (9) für den Folienzuschnitt (10) vorgesehen ist, deren Oberfläche zumindest in Teilbereichen eine etwa dem Formteil (1) entsprechende Kontur aufweist.

12. Vorrichtung nach Anspruch 11, dadurch gekennzeichnet, daß die Aufnahme (9) temperierbar ist.

13. Vorrichtung nach Anspruch 11 oder 12, dadurch gekennzeichnet, daß die Aufnahme (9) mit Kanälen (14) versehen ist, die zum Halten oder Abheben des Folienzuschnittes (10) an Über- oder Unterdruck anschließbar sind.

14. Vorrichtung nach einem der Ansprüche 5 bis 13, dadurch gekennzeichnet, daß die Übergabeeinrichtung einen Rahmen (27) mit Greifelementen (28) für den Folienzuschnitt (10) aufweist.

15. Vorrichtung nach Anspruch 18, dadurch gekennzeichnet, daß der Rahmen (27) mit den Greifelementen (28) die Überdruck-Kammer (24) umgibt und gegenüber der Druckglocke (21) bzw. ihrer Dichtfläche (31) höhenverstellbar ist.

## Claims

1. Process for producing mouldings (1) from porous materials, which are coated with a plastic film (4) on at least one portion (3) of the decorative side thereof and have a different decoration (5) in the remaining area (2), in that the film is plasticized by heating, subsequently applied to the decorative side of the moulding, is shaped onto the latter by vacuum accompanied by the sealing of the film edge projecting over the moulding and is fixed by an adhesive, characterized in that a film blank (10) is produced in accordance with the portion (3) to be coated and after application to the moulding (1) is sealed with respect to the moulding surface along the decorative separating region (6) following the contour of the moulding in this region and subsequently and roughly at the same time with the action of the vacuum, an overpressure is applied to the decorative side of the plastic film.

2. Process according to claim 1, characterized in that roughly at the same time as the overpressure acting on the film blank (16) and the vacuum acting on the underside of the moulding (1), a vacuum is applied to the moulding side having the other decoration (5) outside the overpressure region.

3. Process according to claim 1 or 2, characterized in that the overpressure acting on the decorative side of the plastic film (1) is adjustable.

4. Process according to one of the claims 1 to 3, characterized in that between the edge of the moulding (1) and the projecting edge of the plastic film (4) a material addition is provided thereon and the underpressure and vacuum in the vicinity of the moulding edge are made to act in such a way that the film is shaped around the moulding edge.

5. Apparatus for performing the process according to claim 1 comprising a heating station (7) for heating and plasticizing the plastic film (10), a coating station (8) with a support mould (19) connected to the vacuum and receiving the moulding (1) and a pressure bell (21) located above said support mould, whereby both have sealing faces (31, 32) located outside the mould contour, the support mould being movable with its sealing face against the pressure bell, acccompanied by the tight jamming of the projecting film edge, and with a transfer mechanism (21) receiving the plastic film at the heating station and conveying it to the coating station, characterized in that the pressure bell (21) and the support mould (19) have in the decorative separation region (6) of the moulding (1) sealing faces (33 or 34) following the contour thereof and that the pressure bell (21) is connectable in the space behind the film blank (10) to an adjustable overpressure.

6. Apparatus according to claim 5 for performing the process according to claim 2, characterized in that the pressure bell (21) has two chambers (24, 25) , whose partition (26) runs along the decoration separation region (6) and whereof the chamber (24) associated with the film blank is connected to the overpressure, whilst the other chamber (25) can be connected to the vacuum.

7. Apparatus according to one of the claims 5 or 6, characterized in that heat emitters are incorporated into the overpressure chamber (24) of the pressure bell (21).

8. Apparatus according to one of the claims 5 to 7, characterized in that the overpressure chamber (24) of the pressure bell (21) is scavenged by means of compressed air at the end of the coating process.

9. Apparatus according to one of the claims 5 to 8, characterized in that the pressure bell (21) has as the sealing face sealing members (31, 33) following the blank (10) of the plastic film and the support mould (19) has an elastic sealing cord (32, 34) forming the sealing face.

10. Apparatus according to one of the claims 5 to 9, particularly for performing the process according to claim 4, in which the support mould (19) is undercut along the edge of its contour in such a way that the edge of the moulding (1) is exposed and suction channels (20) issue on the undercut, characterized in that between the undercut (35) on the edge of the mould contour and the sealing face for the projecting film edge, the support mould (19) has a trough-shaped depression (36).

11. Apparatus according to one of the claims 5 to 10, characterized in that on the heating station is provided a receptacle (9) for the film blank (10), whose surface, at least in partial regions, has a contour roughly corresponding to the moulding (1).

12. Apparatus according to claim 11, characterized in that the receptacle (9) is temperature controlled.

13. Apparatus according to claims 11 or 12, characterized in that the receptacle (9) is provided with channels (14), which can be connected to overpressure or vacuum for securing or raising the film blank (10).

14. Apparatus according to one of the claims 5 to 13, characterized in that the transfer mechanism has a frame (27) with gripping members (28) for the film blank (10).

15. Apparatus according to claim 18, characterized in that the frame (27) with the gripping members (28) surrounds the overpressure chamber (24) and is vertically adjustable with respect to the pressure bell (21) or its sealing face (31).

**Revendications**

1. Procédé pour la fabrication de préformés (1) constitués par des matières poreuses et que l'on recouvre par contre-collage, au moins sur une zone partielle (3) de leur côté réservé à la décoration, à l'aide d'une feuille mince en matière synthétique (4) et qui présentent dans la zone restante (2) une autre décoration (5), dans lequel on plastifie la feuille mince par réchauffement, on l'applique ensuite sur le côté du préformé, réservé a la décoration, on la façonne sur le préformé au moyen d'une sous-pression tout en étanchant le bord de la feuille mince, qui fait saillie au-delà du préformé et on la fixe par l'intermédiaire d'un adhésif, caractérisé en ce qu'on prépare une découpe de feuille mince (10) correspondant à la zone partielle (3) à recouvrir par contre-collage et, après son application sur le préformé (1), on l'étanche le long de la zone de séparation de décoration (6), en suivant le contour du préformé présent à cet endroit, vis-à-vis de la surface de ce dernier et en ce qu'on exerce ensuite, à peu près simultanément à la mise en oeuvre de la sous-pression, une surpression sur le côté de la feuille mince en matière synthétique, réservé a la décoration.

2. procédé selon la revendication 1, **caractérisé en ce que**, à peu près simultanément à la mise en oeuvre de la surpression s'exerçant sur la découpe de feuille mince (10) et de la sous-pression s'exerçant sur la face inférieure du préformé (1), on exerce une sous-pression sur le côté du préformé présentant l'autre décoration (5), en dehors de la zone où s'exerce la surpression.

3. Procédé selon la revendication 1 ou 2, **caractérisé en ce qu'**on peut régler la surpression s'exerçant sur le côté de la feuille mince en matière synthétique (4), réservé à la décoration.

4. Procédé selon l'une quelconque des revendications 1 à 3, **caractérisé en ce que**, entre l'arête du préformé (1) et le bord de la feuille mince en matière synthétique (4) faisant saillie, on prévoit un surplus de matière contre cette dernière et en ce qu'on exerce la sous-pression et la surpression dans la zone de l'arête du préformé, de telle sorte que la feuille mince soit façonnée autour de l'arête du préformé.

5. Dispositif pour la mise en oeuvre du procédé selon la revendication 1, comprenant : un poste de chauffage (7) destiné à réchauffer et à plastifier la feuille mince en matière synthétique (10) ; un poste de contre-collage (8) muni d'une forme d'appui (19) sur laquelle vient se disposer le préformé (1) et qui est raccordée à une source de sous-pression, ainsi que d'une cloche de pression (21) disposée au-dessus de la forme d'appui, la cloche de pression et la forme d'appui présentant des surfaces d'étanchement (31, 32) situées a l'extérieur du contour du profilé, dans lequel on peut déplacer la forme d'appui pour que sa surface d'étanchement (en enserrant en étanchement le bord de la feuille mince faisant saillie) vienne se disposer contre la cloche de pression ; et un dispositif de transfert (21) destiné à saisir la feuille mince en matière synthétique au poste de chauffage et à la transporter au poste de contre-collage, **caractérisé en ce que** la cloche de pression (21) et la forme d'appui (19) présentent, dans la zone de séparation de décoration (6) du préformé (1), des surfaces d'étanchement (33 ou 34) qui suivent le contour de ce dernier et **en ce que** la cloche de pression (21) peut être raccordée, dans l'espace ménagé derrière la découpe de feuille mince (10) à une source de surpression réglable.

6. Dispositif selon la revendication 5, destiné à la mise en oeuvre du procédé selon la revendication 2, **caractérisé en ce que** la cloche de pression (21) présente deux chambres (24, 25) dont la paroi de séparation (26) s'étend le long de la zone de séparation de décoration (6), la chambre (24) correspondant à la découpe de feuille mince (10) étant raccordée à la source de surpression, tandis que l'autre chambre (25) peut être raccordée à la source de sous-pression.

7. Dispositif selon l'une quelconque des revendications 5 ou 6, **caractérisé en ce que,** dans la chambre de surpression (24) de la cloche de pression (2l), sont montés des radiateurs thermiques.

8. Dispositif selon l'une quelconque des revendications 5 à 7, **caractérisé en ce qu'**on nettoie la chambre de surpression (24) de la cloche de pression (21) au terme du processus de contre-collage, au moyen d'air sous pression.

9. Dispositif selon l'une quelconque des revendications 5 à 8, **caractérisé en ce que** la cloche de pression (21) présente, comme surface d'appui, une barre d'étanchement (31, 33) qui suit la découpe de feuille mince (10) en matière synthétique et **en ce que** la forme d'appui (19) présente un cordon élastique d'étanchement (32, 34) constituant la surface d' étanchement.

10. Dispositif selon l'une quelconque des revendications 5 à 9, en particulier, pour la mise en oeuvre du procédé selon la revendication 4, dans lequel la forme d'appui (19) est munie d'une contre-dépouille le long du bord de son contour, de telle sorte que l'arête du préformé (1) soit mise à découvert et de telle sorte que des canaux d'aspiration (20) débouchent contre la contre-dépouille, **caractérisé en ce que** la forme d'appui (19) présente, entre la contre-dépouille (35) disposée contre le bord du contour et la surface d'étanchement destinée au bord de la feuille mince faisant saillie, un renfoncement (36) en forme de rigole.

11. Dispositif selon l'une quelconque des revendications 5 à 10, **caractérisé en ce qu'**on prévoit, au poste de chauffage, un logement (9) destiné à la découpe de feuille mince (10), dont la face supérieure présente, au moins dans des zones partielles, un contour correspondant approximativement à celui du préformé (1).

12. Dispositif selon la revendication 11, **caractérisé en ce qu'**on peut régler la température du logement (9).

13. Dispositif selon la revendication 11 ou 12, **caractérisé en ce que** le logement (9) est muni de canaux (14) que l'on peut raccorder à une source de surpression ou de sous-pression, pour le maintien ou le soulèvement de la découpe de feuille mince (10).

14. Dispositif selon l'une quelconque des revendications 5 à 13, **caractérisé en ce que** le dispositif de transfert présente un cadre (27) muni d'éléments de saisie (28) destinés à la découpe de feuille mince (10).

15. Dispositif selon la revendication 18, caractérisé en ce que le cadre (27) muni des éléments de saisie (28) entoure la chambre de surpression (24) et peut être réglé en hauteur vis-à-vis de la cloche de pression (21) ou de la surface d'étanchement (31) de cette dernière.

FIG. 1

FIG. 2

FIG. 3

FIG.4

FIG. 5

FIG. 6

FIG.7

FIG.8